# EUROPEAN PATENT APPLICATION

(11) **EP 1 036 601 A2**
(43) Date of publication of application: **20.09.2000**
(21) Application number: 00302325.6
(22) Date of filing: 13.03.2000
(51) Int. Cl.: B07B 1/10

(54) **Method and apparatus for grading and conveying crop or the like**

(30) Priority: 15.03.1999 GB 9905841
(71) Applicant: Herbert, Roderic Joseph, Walton Highway, Wisbech PE14 7DJ (GB)
(72) Inventor: Herbert, Roderic Joseph, Walton Highway, Wisbech PE14 7DJ (GB)
(74) Representative: Archer, Philip Bruce

(57) **Abstract**

Apparatus for conveying and grading crop or the like comprises a flexible mesh grading conveyor element (20) and associated conveyor rollers. The conveyor element (20) is provided with a at least one driveable conveyor roller (28) having associated projections in the form of roller elements (30) mounted thereon and located so as to contact the underside of the conveyor element (20) to remove crop items lodged therein. The projections (30) rotate in the same direction to that of the forward travel of the conveyor element and at a differing rate of rotation.

## Description

This invention relates to a method and apparatus for grading and conveying crop or the like. An example of the use of the invention is in the grading and conveying of a harvested potato crop. The invention is also applicable to other crops and may be used in any situation where it is desired to grade and sort a crop by means of size. One application of the invention would be in a potato or like grader.

Crop grading apparatus of the type mentioned is used to select or grade a crop according to size. The harvested crop, such as potatoes, is conveyed by a grading module. The grading module generally comprises a flexible mesh and is in the form of a conveyor. The potatoes are either retained by the mesh and conveyed onwards or else passed through the mesh and are collected or conveyed separately. During such an operation the potatoes may partially pass through the mesh and become lodged therein. Any potatoes so retained will be caught between the mesh and the roller at the end of the conveyor and crushed, resulting in damage to the potato. This can result in significant economic losses.

Accordingly, a need for improvements in this respect or generally have been identified.

According to the invention there is provided crop or the like conveying or grading apparatus and a method of conveying and grading crop or the like as defined in the accompanying claims.

In an embodiment of the invention there is provided crop or the like grading and conveying apparatus in which a driveable conveyor element is provided with a plurality of projections associated therewith wherein said projections contact the underside of said conveyor element to remove crop or the like lodged therein. In this way crop which has become lodged in the conveyor is dislodged and conveyed onwards.

Also in the embodiment, the projections are mounted on a shaft. Drive means is provided for said shaft such that the projections are rotated and driven in the direction of forward travel of the conveyor element.

The projections are in the form of rollers and are constructed of a suitable material. At least two and preferably five roller elements are provided and these are arranged around and secured to the shaft in the form of a cage or insert. A plurality of cages or inserts may be mounted on a shaft depending on the width of the conveyor element. For example, apparatus for conveying and grading a crop which has a conveyor which is 8 feet wide may require 4 cages or inserts whereas a conveyor which is 2 feet wide may only require one cage or insert. Such requirements will, of course, vary depending on the length of the cage. By arranging the roller elements circumferentially around the shaft in the form of a cage, the cage is able to function both as a conveyor roller and a means whereby crop and waste material lodged in the conveyor are removed. This provided the advantage that the need for a separate conveyor roller and means for keeping the grading screen clear is avoided.

The working attitude of the conveyor element and the shaft on which the roller elements are mounted is such that rotation of the shaft and associated roller elements results in the rollers acting on the underside of the conveyor element and that portion of the crop which may be projecting through the conveyor when the crop is lodged therein.

As the conveyor is caused to move over the roller elements, said elements contact the conveyor and any material lodged therein. The contact between the roller and the material causes said lodged material to be dislodged as a result of a "pushing" or "lifting" action exerted by the rollers on the lodged material.

In the embodiment, the projections are disposed circumferentially about the shaft on which they are mounted. As the shaft rotates, the rollers mounted thereon successively contact the underside of the conveyor element. In this way a successive cleaning of the conveyor element is provided as it travels over the rollers. The drive means for the shaft may be arranged to cause the rollers to rotate at from 150 to 400% greater than the speed of forward travel of the conveyor element, but not sufficiently quickly to cause damage to any lodged crop contacted by the roller elements. This action of the rollers on the conveyor and/or material lodged therein is non aggressive and is accentuated by the speed of rotation of the shaft and thus the roller elements mounted thereon in relation to the speed of the conveyor element.

As regards the outward or radial extent of the roller projections from the shaft, this is arranged in relation to the conveyor element so that the projections extend towards the underside of the conveyor element such that when rotated the roller elements successively contact the underside of the conveyor element and thereby exert a "pushing" or "lifting" action on any lodged crop.

In a further embodiment of the invention the roller projections make contact with the underside of the conveyor element during use and act to remove waste material which adheres to the conveyor element during use and assist in maintaining the sizing accuracy of the conveyor element.

According to the invention there is also provided a method of conveying or like comprising the steps of driving a grading and conveyor element, mounting projections on a conveyor roller over which said conveyor element is caused to travel and the step of causing said projections to contact the underside of the conveyor element so as to remove material therefrom.

An embodiment of the invention will now be described by way of example with reference to the accompanying drawings in which :
Fig 1 shows a plan view of a typical crop or the like conveying and grading apparatus of the type which would utilise the invention;
Fig 2 shows a side elevation view of the apparatus of Fig 1; and
Fig 3 shows a schematic side elevation view comprising the conveying and grading element and a portion of the axial length of the shaft including the associated roller elements.

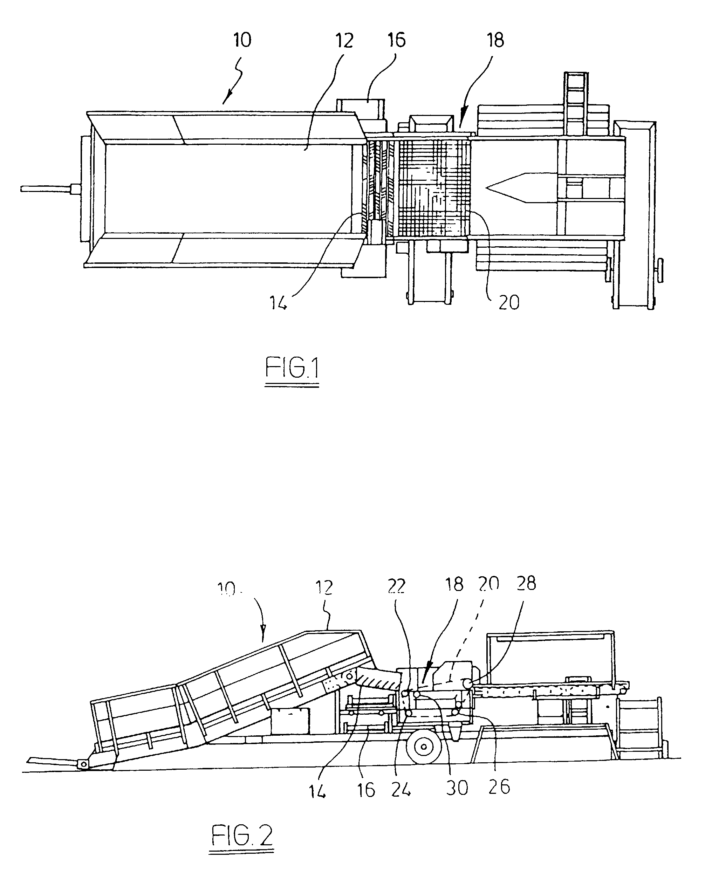

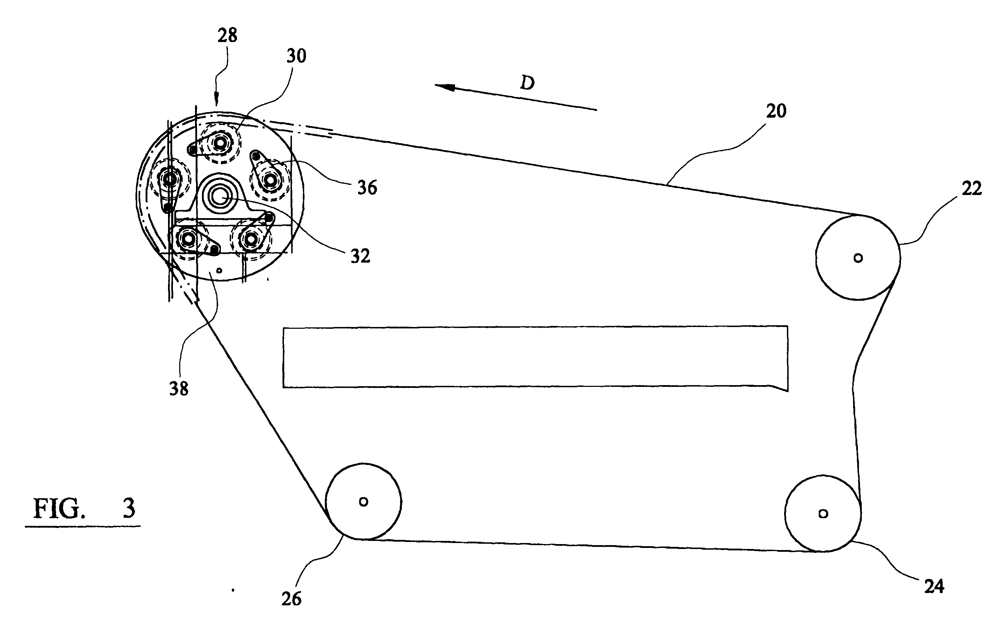

As shown in the drawings, a typical crop conveying and grading apparatus 10 comprises a bulk hopper 12 to receive the bulk crop once harvested. A cleaner module 14 may be provided to clean the crop and facilitate the removal of stones and clods prior to grading. The waste material removed by the cleaner module 14 is removed by conveyor 16 located beneath the cleaner module 14. The crop is then conveyed onto a grader module 18. The grader module 18 comprises a flexible mesh in the form of a driveable grading conveyor 20 utilising a number of conveyor rollers 22, 24 and 26 as seen in Figs 2 and 3.

As seen in Fig 3, a plurality of roller elements 30 are arranged around and secured to a shaft 32 in the form of a cage or insert 28. By locating.the roller cage 28 in this region the cage 28 acts as both a conveyor roller and a means whereby crop and waste material lodged in the conveyor are removed Each of the roller elements 30 are mounted on a shaft bolting tab 36 which is secured to an end plate 38. A number of roller elements 30 are secured to the same end plate, circumferentially around the plate as required. The end plate 38 is provided with a central hole through which the shaft 32 can pass in order to retain the roller elements 30 in the required position with relation to the shaft 32. The ends of the shaft 32 are mounted in end bearings to facilitate rotation. The shaft 32 is driveably mounted on the chassis of the apparatus 10.

The direction of rotation of the shaft 32 and associated roller elements 30 is shown in Fig 3 and likewise the direction of forward travel of the grading conveyor 20 and thus the conveying direction for crop passing over the apparatus is indicated by arrow D in Fig 3. Roller elements 30 extend across the width of the conveyor element 20.

The drive (not shown) for the shaft 32 is arranged to rotate the shaft 32 and the roller cage 28 mounted thereon, at a different speed to the forward speed of the grading conveyor 20 preferably in the range from 150 to 400% faster. By virtue of the differential in speed the roller elements 30 act on successive portions of the grading conveyor 20 so as to remove crop lodged therein efficiently. The axis of the shaft 32 extends laterally across the width of the grading conveyor 20.

In use, crop material is conveyed in direction D from the bulk hopper 12 over the cleaner module 14 and on to the grading module 18 comprising a grading conveyor 20. Unwanted material passes between the elements of the cleaner module and is conveyed separately.

As the crop reaches the grading conveyor 20 crop of a certain size is retained on the surface of the conveyor 20 and are conveyed onwards. Crop which is too small to be retained by the flexible mesh forming the grading conveyor 20 passes through and is collected/conveyed separately. Due to the variability of natural produce there are crop items which are of an uneven size being narrower at one end and as such tend to partially pass through the grading conveyor and become lodged therein.

As the grading conveyor 20 conveys and sorts the crop, shaft 32 is caused to rotate and the roller cage 28 mounted thereon to rotate likewise and the roller elements 30 which make up the cage 28 are caused to act on the underside of the conveyor 20 and make non aggressive contact therewith. When the roller elements 30 come into contact with a portion of a lodged crop item extending through the conveyor 20 they exert a pushing action against it which acts to push or lift the crop item and thus release it from the conveyor 20. The action of the roller elements 32 serve to remove lodged crop items before these are conveyed towards the next conveyor roller 26 where they will be crushed and damaged.

Modifications which could be made in the above embodiments include the following. Firstly, the roller elements 30 could rotate at the same speed as the conveyor 20. Secondly, the form and number of roller elements 30 could be varied considerably and likewise the choice of material thereof is open to considerable variation. Thirdly, if desired, more than one shaft 32 and its associated roller elements 30 could be used and their positions varied according to requirements.

## Claims

1. Crop or the like conveying and grading apparatus comprising a driveable grading conveyor element and associated conveyor rollers characterised in that at least one conveyor roller is driveable, said roller having projections associated therewith wherein said projections contact the underside of said conveyor element across the width thereof to remove crop or the like lodged therein.

2. Apparatus according to claim 1 characterised by said projections being mounted on a shaft.

3. Apparatus according to claim 2 characterised in that drive means is provided for said shaft.

4. Apparatus according to claim 3 characterised by said drive being adapted to rotate said shaft and projections mounted thereon.

5. Apparatus according to claim 4 characterised in that said drive is adapted to rotate said shaft and projections mounted thereon in the direction of forward movement of said conveyor element.

6. Apparatus according to claim 5 characterised by said drive being adapted to rotate said projections at a different speed from the rate of forward movement of said conveyor element.

7. Apparatus according to claim 6 characterised by said drive being adapted to rotate said projections at a speed of from 150 to 400% faster than the forward movement of said conveyor element.

8. Apparatus according to claim 1 characterised in that said projections are in the form of roller elements.

9. Apparatus according to claim 8 characterised in that said roller elements are arranged circumferentially around the shaft to form a cage.

10. Apparatus according to claim 9 characterised in that said cage acts as a conveyor roller.

11. A method of conveying crop or the like comprising driving a grading and conveyor element, mounting one or several projections adjacent said conveyor element across the width thereof and causing said projections to contact the underside of said conveyor element so as to remove material therefrom.
